# EUROPÄISCHE PATENTSCHRIFT

(11) **EP 3 621 763 B1**
(45) Veröffentlichungstag und Bekanntmachung des Hinweises auf die Patenterteilung: **17.07.2024**
(21) Anmeldenummer: 18723527.0
(22) Anmeldetag: 09.05.2018
(51) Int. Cl.: B23D 77/00

(54) **MEHRSCHNEIDIGE REIBAHLE**
MULTI-EDGE REAMER
ALÉSOIR À PLUSIEURS TRANCHANTS

(30) Priorität: 11.05.2017 DE 102017208017
(43) Veröffentlichungstag der Anmeldung: 18.03.2020
(73) Patentinhaber: MAPAL Fabrik für Präzisionswerkzeuge Dr. Kress KG, 73431 Aalen (DE)
(72) Erfinder: KRESS, Jochen, 73430 Aalen (DE)
(74) Vertreter: Kordel, Mattias
(86) Internationale Anmeldenummer: PCT/EP2018/062110
(87) Internationale Veröffentlichungsnummer: WO 2018/206704

(56) Entgegenhaltungen:
- DE-U1- 20 319 341
- JP-A- 2008 194 779
- US-A1- 2005 169 721
- US-A1- 2012 034 043

## Beschreibung

Die Erfindung betrifft eine mehrschneidige Reibahle gemäß dem Oberbegriff des Patentanspruchs 1. Eine derartige Reibahle geht beispielsweise aus der DE 203 19 341 U1 hervor.

Eine solche Reibahle weist einen Schneidbereich mit einem eine Mittelachse aufweisenden Grundkörper auf, wobei von dem Grundkörper eine Anzahl von Schneiden mit jeweils einer Schneidkante und mit einer sich daran anschließenden, einen Führungsbereich für die jeweilige Schneide bildenden Rundschlifffase ausgeht. Typischerweise sind die Rundschlifffasen aller Schneiden - in Umfangsrichtung gesehen - gleich breit. Solche Reibahlen erfahren während einer Bearbeitung eines Werkstücks typischerweise eine Auslenkung, was sich insbesondere in einer verbesserungsfähigen Oberflächenqualität einer bearbeiteten Oberfläche des Werkstücks bemerkbar macht. Außerdem ist die Rundheit einer mit einer solchen Reibahle bearbeiteten Bohrung verbesserungsfähig.

Der Erfindung liegt die Aufgabe zugrunde, eine mehrschneidige Reibahle der zuvor angesprochenen Art zu schaffen, welche die genannten Nachteile nicht aufweist.

Die Aufgabe wird gelöst, indem eine mehrschneidige Reibahle mit den Merkmalen des Anspruchs 1 geschaffen wird. Vorteilhafte Ausgestaltungen ergeben sich aus den Unteransprüchen.

Bei der hier vorgeschlagenen, mehrschneidigen Reibahle ist insbesondere vorgesehen, dass von dem Grundkörper zumindest eine erste Anzahl von ersten Schneiden mit jeweils einer Schneidkante und mit einer sich daran anschließenden, einen Führungsbereich für die jeweilige erste Schneide bildenden Rundschlifffase mit einer ersten Breite ausgeht. Von dem Grundkörper geht außerdem eine zweite Anzahl von zweiten Schneiden aus, wobei die zweiten Schneiden jeweils eine Schneidkante und eine sich daran anschließende, einen Führungsbereich für die jeweilige zweite Schneide bildende Rundschlifffase mit einer zweiten Breite aufweisen. Die erste Breite ist größer als die zweite Breite. Die erste Anzahl von ersten Schneiden ist größer als die zweite Anzahl von zweiten Schneiden. Die mehrschneidige Reibahle weist also mehr Schneiden mit der ersten, größeren Breite der jeweiligen Rundschlifffase auf als Schneiden mit der zweiten, kleineren Breite der Rundschlifffasen. Weiter ist vorgesehen, dass alle ersten Schneiden einander - in Umfangsrichtung des Grundkörpers gesehen - unmittelbar benachbart angeordnet sind, derart, dass sie in einer zusammenhängenden Gruppe angeordnet sind. Aufgrund der verschieden breiten Rundschlifffasen der verschiedenen Schneiden und deren gruppierter Anordnung ergibt sich bei der Bearbeitung eines Werkstücks mit der mehrschneidigen Reibahle eine symmetrische Verteilung der Schnitt- und Abstützkräfte, sodass letztlich eine verbesserte Oberflächengüte, insbesondere eine glattere Oberfläche, bei der Bearbeitung eines Werkstücks sowie eine höhere Rundheit einer bearbeiteten Bohrung erreicht werden kann.

Die Erfindung sieht vor, dass genau eine zweite Schneide vorgesehen ist. Ausführungsformen mit mehr als einer zweiten Schneide fallen nicht unter den Schutzumfang der Ansprüche.

Unter einer Schneide wird hier insbesondere ein Bereich der Reibahle verstanden, der sich ausgehend von dem Grundkörper radial auswärts erstreckt, wobei radial außen an der Schneide die jeweilige Schneidkante angeordnet ist, die in schneidenden Eingriff mit der bearbeiteten Oberfläche eines Werkstücks kommt. Die Schneidkante ist vorzugsweise geometrisch definiert ausgebildet. Die Schneidkanten der verschiedenen Schneiden liegen insbesondere auf einem Flugkreis der mehrschneidigen Reibahle und definieren derart einen Bearbeitungsdurchmesser derselben. Solche Schneiden werden auch als Stollen oder Zähne bezeichnet. Es ist möglich, dass die Schneiden einstückig mit dem Grundkörper ausgebildet sind, der quasi als Kern der mehrschneidigen Reibahle ausgebildet sein kann, von dem ausgehend sich die verschiedenen Schneiden oder Stollen radial nach außen - quasi wie Arme - erstrecken. Die Schneiden können aber auch mehrteilig mit dem Grundkörper ausgebildet und vorzugsweise an diesem befestigt sein, beispielsweise durch Löten, insbesondere Hartlöten, Schweißen, und/oder Kleben, aber auch mechanisch, beispielsweise durch eine Schraubverbindung, oder in anderer geeigneter Weise.

Die Reibahle weist vorzugsweise einen Schaft auf, der sich in Richtung der Mittelachse des Grundkörpers erstreckt, wobei der Schaft an einem ersten Ende den Schneidbereich und an einem zweiten, dem ersten Ende entlang der Mittelachse gegenüberliegenden Ende einen Einspannabschnitt aufweist, mit dem er in eine Werkzeughalterung, beispielsweise eine Maschinenspindel, eine Verlängerung, einen Adapter, allgemein in ein Spannfutter oder dergleichen, einspannbar ist. Zur Bearbeitung eines Werkstücks wird vorzugsweise eine Relativdrehung der mehrschneidigen Reibahle relativ zu dem Werkstück um die Mittelachse bewirkt, wobei in besonders bevorzugter Weise die Reibahle um die Mittelachse gedreht wird.

Die Schneidkanten bewegen sich dabei in Umfangsrichtung entlang des Flugkreises und können so Material von einer bearbeiteten Oberfläche des Werkstücks abtragen.

Unter einer Axialrichtung wird eine Richtung verstanden, die sich parallel zu der Mittelachse erstreckt, wobei sie insbesondere mit der Mittelachse zusammenfällt. Unter einer radialen Richtung wird eine Richtung verstanden, die senkrecht auf der Mittelachse steht. Unter einer Umfangsrichtung wird eine Richtung verstanden, die sich konzentrisch um die Mittelachse erstreckt.

Die Schneidkante einer Schneide der mehrschneidigen Reibahle entsteht insbesondere als Schnittlinie einer Spanfläche der Schneide mit der jeweiligen Rundschlifffase, wobei sich - in Umfangsrichtung gesehen - an ein der Schneidkante abgewandtes Ende der Rundschlifffase bevorzugt eine Freifläche anschließt. Die Rundschlifffase bildet dabei einen Übergangsbereich zwischen der Schneidkante und der Freifläche, wobei die Rundschlifffase derart ausgebildet ist, dass sie in berührenden Kontakt mit der bearbeiteten Oberfläche des Werkstücks kommt und dabei die mehrschneidige Reibahle bei der Bearbeitung des Werkstücks abstützt und führt, wobei die Freifläche bei der Bearbeitung des Werkstücks nicht in berührenden Kontakt mit der bearbeiteten Oberfläche kommt.

Unter einer Rundschlifffase wird insbesondere ein - insbesondere zwischen der Schneidkante und der Freifläche angeordneter - rundgeschliffener Flächenbereich verstanden, dessen Krümmungsradius bevorzugt dem halben Nenndurchmesser des Werkzeugs entspricht, so dass sich das Werkzeug mit der Rundschlifffase flächig an einer bearbeiteten Oberfläche eines Werkstücks abstützen kann.

Die Breite der Rundschlifffase wird jeweils in Umfangsrichtung der Reibahle gemessen. Dabei ist die erste Breite größer als die zweite Breite; die Rundschlifffasen der ersten Schneiden erstrecken sich also über einen größeren Umfangsbereich als die Rundschlifffasen der zweiten Schneiden. Entsprechend ist die zweite Breite kleiner als die erste Breite.

Bevorzugt weisen die Rundschlifffasen aller ersten Schneiden dieselbe erste Breite auf.

Die erste Anzahl von ersten Schneiden beträgt mindestens drei. Bei einem bevorzugten Ausführungsbeispiel ist die Summe aus der ersten Anzahl von ersten Schneiden und der zweiten Schneide eine gerade Zahl.

Es ist aber bei anderen Ausführungsbeispielen der Reibahle auch möglich, dass sich die erste Anzahl und die zweite Anzahl zu einer ungeraden Zahl addieren.

Dass alle ersten Schneiden einander in Umfangsrichtung gesehen unmittelbar benachbart sind, bedeutet insbesondere, dass nur eine und genau eine zusammenhängende Gruppe erster Schneiden existiert, wobei nicht etwa beispielsweise erste Schneiden und zweite Schneiden alternierend angeordnet sind. Insbesondere sind die ersten Schneiden nicht durch beispielsweise zwei - ihrerseits durch erste Schneiden getrennt voneinander angeordnete - zweite Schneiden in zwei separate, jeweils zusammenhängende Gruppen von ersten Schneiden aufgeteilt. Vielmehr sind jeder ersten Schneide, bis auf zwei randständige erste Schneiden der zusammenhängenden Gruppe - sofern die mehrschneidige Reibahle mehr als zwei erste Schneiden aufweist -, zwei unmittelbar benachbarte erste Schneiden zugeordnet, wobei nur den beiden randständigen ersten Schneiden jeweils nur eine unmittelbar benachbarte, weitere erste Schneide zugeordnet ist, wobei diese randständigen ersten Schneiden als weitere, unmittelbar benachbarte Schneide keine erste Schneide aufweisen. Diese weitere Schneide ist insbesondere dann eine zweite Schneide, wenn die mehrschneidige Reibahle nur erste und zweite Schneiden, nicht jedoch dritte Schneiden ohne Führungsbereich oder mit einer Rundschlifffase mit einer dritten Breite, aufweist. Dass alle ersten Schneiden einander unmittelbar benachbart sind, sodass sie in einer zusammenhängenden Gruppe angeordnet sind, bedeutet demnach insbesondere, dass die mehrschneidige Reibahle nicht mehr als zwei randständige erste Schneiden aufweist, denen jeweils nur eine unmittelbar benachbarte erste Schneide zugeordnet ist.

Die mehrschneidige Reibahle ist vorzugsweise frei von separaten, von einer Schneidkante getrennten Führungsbereichen. Insbesondere weist die mehrschneidige Reibahle bevorzugt keinen Führungsstollen auf, wobei unter einem Führungsstollen oder unter einem von einer Schneidkante separaten Führungsbereich ein Stollen oder Bereich verstanden wird, der ausschließlich eine Führungsfunktion und/oder eine Abstützfunktion, jedoch keine Schneidfunktion aufweist.

Gemäß einem nicht erfindungsgemäßen Ausführungsbeispiel ist vorgesehen, dass alle zweiten Schneiden einander - in Umfangsrichtung gesehen - unmittelbar benachbart sind, sodass sie in einer zusammenhängenden Gruppe angeordnet sind. Dabei weist die mehrschneidige Reibahle bevorzugt eine Mehrzahl zweiter Schneiden auf. Die mehrschneidige Reibahle weist also vorzugsweise auch genau zwei und insbesondere nicht mehr als zwei randständige zweite Schneiden auf, denen jeweils nur eine unmittelbar benachbarte zweite Schneide zugeordnet ist, wobei ihnen jeweils eine unmittelbar benachbarte Schneide, die keine zweite Schneide ist, zugeordnet ist. Sind sowohl die ersten Schneiden als auch die zweiten Schneiden in der hier angesprochenen Weise gruppiert, ergibt sich ein besonders ruhiges Arbeitsverhalten der mehrschneidige Reibahle und damit eine besonders hohe Qualität einer bearbeiteten Oberfläche eines Werkstücks sowie eine besonders hohe Rundheit einer bearbeiteten Bohrung.

Es wird ein Ausführungsbeispiel einer mehrschneidigen Reibahle bevorzugt, das nur erste Schneiden und die zweite Schneide aufweist. Es sind also insbesondere keine dritten Schneiden vorgesehen, die entweder keinen Führungsbereich und somit keine Rundschlifffase, oder aber eine Rundschlifffase mit einer dritten, von der ersten Breite und von der zweiten Breite verschiedenen Breite, aufweisen. In diesem Fall ergibt sich von selbst, dass auch die ersten Schneiden einander unmittelbar benachbart und in einer zusammenhängenden Gruppe angeordnet sind. Gemäß einer Weiterbildung der Erfindung ist vorgesehen, dass zumindest eine der Schneiden, ausgewählt aus den wenigstens zwei ersten Schneiden und der einen zweiten Schneide, eine Freifläche aufweist, welche sich an die Rundschlifffase anschließt. Wie bereits zuvor angesprochen, schließt sich demnach - in Umfangsrichtung gesehen - an die Schneidkante die Rundschlifffase an, wobei sich an die Rundschlifffase wiederum die Freifläche anschließt. Die Schneidkante geht dabei insbesondere über die Rundschlifffase in die Freifläche über.

Gemäß einer Weiterbildung der Erfindung ist vorgesehen, dass die Schneiden - in Umfangsrichtung gesehen - in ungleichen Winkelabständen zueinander angeordnet sind. Dies bedeutet insbesondere, dass die Schneiden nicht symmetrisch entlang des Umfangs des Grundkörpers verteilt sind. Sie sind vielmehr derart entlang des Umfangs angeordnet, dass sich eine asymmetrische Verteilung ergibt. Dabei ist es möglich, dass nur ein Winkelabstand zwischen zwei benachbarten Schneiden verschieden ist von einem Winkelabstand, den die übrigen Schneiden jeweils zueinander aufweisen. Es ist aber auch möglich, dass alle Winkelabstände einander paarweise benachbarter Schneiden voneinander verschieden sind, so dass kein Winkelabstand zweimal vorgesehen ist. Auch andere Verteilungen gleicher oder verschiedener Winkelabstände sind möglich. Eine asymmetrische Verteilung der Schneiden entlang des Umfangs des Grundkörpers trägt dazu bei, dass ein die Oberflächenqualität eines bearbeiteten Werkstücks minderndes Rattern der Reibahle bei der Bearbeitung eines Werkstücks verringert oder ganz vermieden wird. Die entsprechende Verteilung der Schneiden trägt somit auch zu einer hohen Qualität der bearbeiteten Oberfläche sowie zu einer besonders hohen Rundheit einer bearbeiteten Bohrung bei.

Gemäß einer Weiterbildung der Erfindung ist vorgesehen, dass die Schneiden an ihrem Übergang zum Grundkörper - in Umfangsrichtung gesehen - ungleiche Breiten aufweisen. Die Stollen der Reibahle sind also insbesondere verschieden stark oder dick ausgebildet, sodass sie eine verschiedene Stabilität und Steifigkeit aufweisen. Dies kann ebenfalls dazu beitragen, Schwingungen oder Rattern bei der Bearbeitung eines Werkstücks zu vermindern.

Gemäß einer Weiterbildung der Erfindung ist vorgesehen, dass die Freifläche zumindest einer Schneide, ausgewählt aus den wenigstens drei ersten Schneiden und der einen zweiten Schneide, größer ist als die Freifläche von zumindest einer anderen Schneide, ausgewählt aus den wenigstens drei ersten Schneiden und der einen zweiten Schneide. Insbesondere ist es möglich, dass die ersten Schneiden größere Freiflächen aufweisen als die zweite Schneide. Es ist aber auch möglich, dass die zweite Schneide eine größere Freifläche aufweist als die ersten Schneiden. Es ist möglich, dass die Freiflächen aller ersten Schneiden gleich groß sind, wobei jedoch die Größe der Freiflächen der ersten Schneiden bevorzugt verschieden ist von der Größe der Freifläche der zweiten Schneide. Es ist aber auch möglich, dass zumindest zwei erste Schneiden zueinander verschieden große Freiflächen aufweisen.

Unter einer Größe einer Freifläche wird insbesondere eine - in Umfangsrichtung gemessene - Freiflächenbreite verstanden.

Gemäß einem Ausführungsbeispiel der mehrschneidigen Reibahle ist es möglich, dass die Breite der Freifläche mit der Breite der jeweiligen Schneide, insbesondere im Bereich des Übergangs zum Grundkörper, skaliert, sodass breitere Schneiden breitere Freiflächen aufweisen, wobei schmalere Schneiden schmalere Freiflächen aufweisen.

Es ist auch möglich, dass zumindest eine Schneide eine geteilte Freifläche aufweist, die einen ersten, sich unmittelbar an die Rundschlifffase anschließenden Freiflächenbereich und einen zweiten, sich an den ersten Freiflächenbereich anschließenden Freiflächenbereich aufweist, wobei der erste Freiflächenbereich vorzugsweise über einen Knick oder eine Krümmung in den zweiten Freiflächenbereich übergeht. Der erste Freiflächenbereich und der zweite Freiflächenbereich schließen demnach vorzugsweise einen von 0° und von 180° verschiedenen Winkel miteinander ein. Es ist möglich, dass alle ersten Freiflächenbereiche der Reibahle gleich groß ausgebildet sind, wobei sich nur die zweiten Freiflächenbereiche in ihrer Größe unterscheiden. Dabei kann insbesondere die Größe der zweiten Freiflächenbereiche von der Breite der jeweiligen Schneide im Bereich des Übergangs zum Grundkörper abhängen, wobei insbesondere breitere Schneiden größere zweite Freiflächenbereiche aufweisen können.

Es ist auch möglich, dass schmalere Schneiden nur eine homogene Freifläche mit nur einem Freiflächenbereich aufweisen, wobei breitere Schneiden zwei Freiflächenbereiche aufweisen. Auch ist es möglich, dass der erste Freiflächenbereich für alle Schneiden gleich groß ist, insbesondere gleich groß wie der einzige Freiflächenbereich der schmaleren Schneiden, welche nur einen Freiflächenbereich aufweisen, wobei die breiteren Schneiden dadurch größere Freiflächen aufweisen, dass sie zusätzlich zu dem ersten Freiflächenbereich den zweiten Freiflächenbereich aufweisen, der für alle breiteren Schneiden gleich groß, aber auch unter den breiteren Schneiden verschieden groß ausgebildet sein kann, insbesondere abhängig von der jeweiligen Breite der breiteren Schneiden im Bereich von deren Übergang zum Grundkörper.

Gemäß einer Weiterbildung der Erfindung ist vorgesehen, dass eine Summe der ersten Breiten von mindestens 3,5 % bis höchstens 10 % eines Werkzeugumfangs der mehrschneidigen Reibahle beträgt. Die Summe der zweiten Breiten beträgt alternativ oder zusätzlich von mindestens 0,4 % bis höchstens 1,3 % des Werkzeugumfangs. Alternativ oder zusätzlich beträgt eine Summe der ersten Breiten und der zweiten Breiten von mindestens 3,9 % bis höchstens 11 % des Werkzeugumfangs.

Unter einem Werkzeugumfang wird hier insbesondere der Umfang des Flugkreises der mehrschneidigen Reibahle verstanden. Unter einer Summe der ersten Breiten wird die Summe über die ersten Breiten der Rundschlifffasen aller ersten Schneiden verstanden. Ist die erste Breite für alle ersten Schneiden konstant, entspricht dies gerade der konstanten ersten Breite multipliziert mit der Anzahl der ersten Schneiden. Unter einer Summe der zweiten Schneiden wird entsprechend eine Summe über die zweiten Breiten der Rundschlifffasen aller zweiten Schneiden verstanden. Ist die zweite Breite für alle zweiten Schneiden konstant, entspricht dies gerade dieser konstanten zweiten Breite multipliziert mit der Anzahl der zweiten Schneiden. Unter einer Summe der ersten Breiten und der zweiten Breiten wird eine Summe über die ersten Breiten der Rundschlifffasen aller ersten Schneiden und zusätzlich über die zweiten Breiten der Rundschlifffasen aller zweiten Schneiden verstanden. Sind die erste Breite und die zweite Breite jeweils über alle ihnen jeweils zugeordneten Schneiden konstant, entspricht dies also der Summe aus der ersten, konstanten Breite multipliziert mit der Anzahl der ersten Schneiden und der zweiten, konstanten Breite multipliziert mit der Anzahl der zweiten Schneiden.

Mit den hier explizit genannten Werten für die Summen von Breiten kann ein einerseits sehr stabiles und andererseits präzises Werkzeug bereitgestellt werden, sodass eine mit der mehrschneidigen Reibahle bearbeitete Oberfläche besonders glatt und eine bearbeitete Bohrung besonders rund ist.

Gemäß der Erfindung ist vorgesehen, dass die mehrschneidige Reibahle genau eine zweite Schneide aufweist. Dabei verwirklichen sich in besonderer Weise die bereits genannten Vorteile. Die mehrschneidige Reibahle kann verschiedene Anzahlen erster Schneiden aufweisen. Die mehrschneidige Reibahle weist von mindestens drei ersten Schneiden bis höchstens sieben erste Schneiden auf. Vorzugsweise weist die mehrschneidige Reibahle drei erste Schneiden, fünf erste Schneiden, oder sieben erste Schneiden auf.

Gemäß einer Weiterbildung der Erfindung ist vorgesehen, dass die erste Breite von mindestens 0,3 mm bis höchstens 0,55 mm beträgt. Alternativ oder zusätzlich beträgt die zweite Breite bevorzugt von mindestens 0,1 mm bis höchstens 0,35 mm. In diesen Wertebereichen verwirklichen sich in besonderer Weise die bereits genannten Vorteile.

Gemäß einer Weiterbildung der Erfindung ist schließlich vorgesehen, dass die Summe aus der ersten Anzahl von ersten Schneiden und der zweiten Schneide vier, sechs oder acht beträgt. Bei diesen Werten verwirklichen sich in besonderer Weise die bereits genannten Vorteile. Bevorzugt weist die mehrschneidige Reibahle dabei ausschließlich erste Schneiden und die zweite Schneide, jedoch keine weiteren, insbesondere keine dritten Schneiden, auf. Die mehrschneidige Reibahle weist also bevorzugt insgesamt genau vier, genau sechs oder genau acht Schneiden auf.

Die Erfindung wird im Folgenden anhand der Zeichnung näher erläutert. Dabei zeigen:
- Figur 1: eine Darstellung eines Ausführungsbeispiels einer mehrschneidige Reibahle;
- Figur 2: eine Seitenansicht des Ausführungsbeispiels der mehrschneidigen Reibahle gemäß Figur 1, und
- Figur 3: eine stirnseitige Ansicht des Ausführungsbeispiels der mehrschneidigen Reibahle gemäß den Figuren 1 und 2.

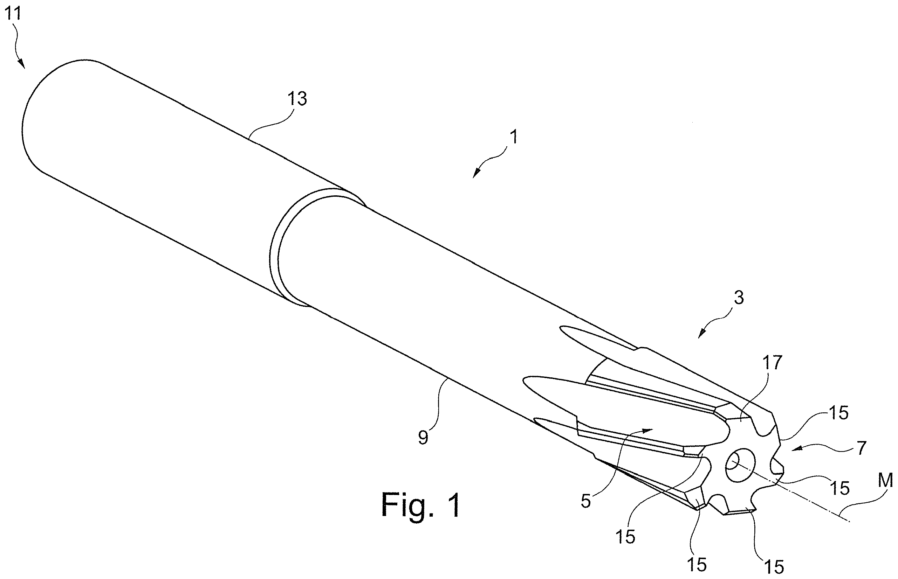

Figur 1 zeigt eine Darstellung eines Ausführungsbeispiels einer mehrschneidigen Reibahle 1, die einen Schneidbereich 3 mit einem Grundkörper 5 aufweist. Der Grundkörper 5 weist eine Mittelachse M auf, um welche die Reibahle 1 insbesondere zur Bearbeitung eines Werkstücks in Drehung versetzt wird.

Der Grundkörper 5 ist an einem ersten, stirnseitigen Ende 7 eines Schafts 9 angeordnet, wobei er bevorzugt einstückig mit dem Schaft 9 ausgebildet ist. Insbesondere ist es möglich, dass der Schneidbereich 3 aus dem Material des Schafts 9 im Bereich des stirnseitigen Endes 7 herausgearbeitet ist.

An seinem dem stirnseitigen Ende 7 - in Richtung der Mittelachse M, d.h. in Längsrichtung gesehen - gegenüberliegenden, zweiten Ende 11 weist der Schaft 9 einen Einspannabschnitt 13 auf, der in für sich genommen bekannter und üblicher Weise mit einem Spannfutter, einem Adapter, einer Verlängerung, und/oder einer Maschinenspindel verbunden werden kann, um die Reibahle 1 in Drehung zu versetzen und ein Werkstück bearbeiten zu können.

Von dem Grundkörper 5 geht eine erste Anzahl von ersten Schneiden 15 aus. Diese Schneiden 15 erstrecken sich wie Arme ausgehend von dem Grundkörper 5 radial nach außen, wobei der Grundkörper 5 insoweit einen Kern des Schneidbereichs 3 bildet. Die Schneiden 15 werden auch als Stollen bezeichnet. Weiter geht von dem Grundkörper 5 eine zweite Anzahl von zweiten Schneiden 17 aus. Auch die zweiten Schneiden 17 erstrecken sich - genau wie die ersten Schneiden 15 - wie Arme ausgehend von dem Grundkörper 5 radial nach außen und werden auch als Stollen bezeichnet. Insoweit besteht kein Unterschied zwischen den ersten Schneiden 15 und den zweiten Schneiden 17. Die Erfindung sieht vor, dass genau eine zweite Schneide vorgesehen ist. Ausführungsformen mit mehr als einer zweiten Schneide fallen nicht unter den Schutzumfang der Ansprüche.

Das hier dargestellte Ausführungsbeispiel der Reibahle 1 weist fünf erste Schneiden 15 auf. Die erste Anzahl beträgt also fünf. Es weist außerdem genau eine zweite Schneide 17 auf. Die zweite Anzahl beträgt also eins. Die Summe aus der ersten Anzahl und der zweiten Anzahl beträgt hier demnach sechs. Die mehrschneidige Reibahle 1 weist insbesondere insgesamt nur sechs und genau sechs Schneiden auf, somit insgesamt ausschließlich erste Schneiden 15 und zweite Schneiden 17, hier genau eine zweite Schneide 17.

Bei anderen Ausführungsbeispielen der mehrschneidigen Reibahle 1 ist es möglich, dass die Summe aus der ersten Anzahl und der zweiten Anzahl vier oder acht beträgt. Es sind aber auch ungerade Summen aus der ersten Anzahl und der zweiten Anzahl möglich.

Bei Ausführungsbeispielen der mehrschneidigen Reibahle 1 ist es möglich, dass die Anzahl der ersten Schneiden 15 von mindesten drei bis höchstens sieben beträgt. Insbesondere kann die erste Anzahl drei oder sieben betragen.

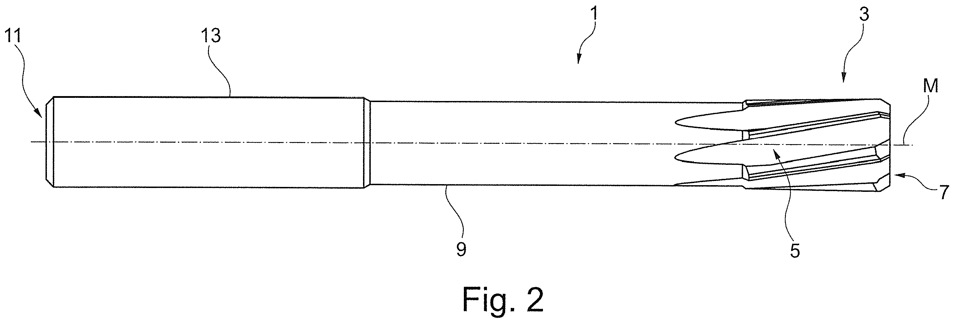

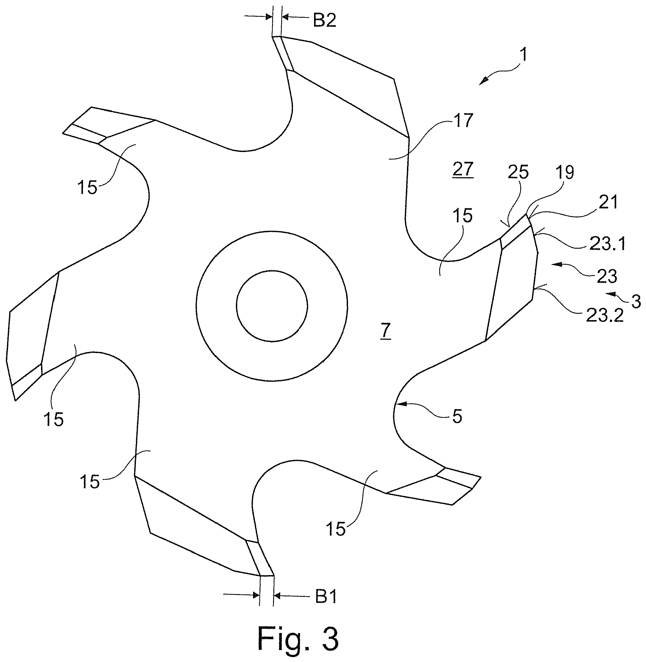

Figur 2 zeigt eine Seitenansicht des Ausführungsbeispiels der Reibahle 1 gemäß Figur 1. Gleiche und funktionsgleiche Elemente sind mit gleichen Bezugszeichen versehen, sodass insofern auf die vorangegangene Beschreibung verwiesen wird. Hier ist nochmals besonders gut der sich in Richtung der Mittelachse M erstreckende Schaft 9 mit dem Einspannabschnitt 13 und dem Schneidbereich 3 erkennbar. Wie bereits angesprochen, wird die mehrschneidige Reibahle 1 zur Bearbeitung eines Werkstücks bevorzugt um die Mittelachse M, die insoweit die Längsachse oder Längserstreckung der Reibahle 1 darstellt, in Drehung versetzt. Eine radiale Richtung steht senkrecht auf der Mittelachse M. Eine Umfangsrichtung umgreift die Mittelachse konzentrisch. Figur 3 zeigt eine stirnseitige Ansicht des Ausführungsbeispiels der mehrschneidigen Reibahle 1 gemäß den Figuren 1 und 2. Gleiche und funktionsgleiche Elemente sind mit gleichen Bezugszeichen versehen, sodass insofern auf die vorangegangene Beschreibung verwiesen wird. Dabei fällt der Blick des Betrachters in Figur 3 auf das stirnseitige, erste Ende 7 des Schafts 9, und somit stirnseitig auf den Schneidbereich 3.

Anhand von Figur 3 wird deutlich, dass jeder Schneide 15, 17 der ersten Schneiden 15 und der zweiten Schneiden 17 jeweils eine Schneidkante 19 zugeordnet ist, wobei der besseren Übersichtlichkeit wegen hier nur eine Schneidkante 19 mit einem entsprechenden Bezugszeichen bezeichnet ist. Weiterhin weist jede Schneide 15 einen sich an die Schneidkante 19 - in Umfangsrichtung gesehen - unmittelbar anschließenden Führungsbereich in Form einer Rundschlifffase 21 auf, wobei der besseren Übersichtlichkeit wegen hier auch nur eine der Rundschlifffasen 21 mit einem Bezugszeichen versehen ist. Die Rundschlifffasen 21 dienen zur Abstützung und Führung der Reibahle 1 an einer bearbeiteten Werkstückoberfläche.

Die Rundschlifffasen 21 der ersten Schneiden 15 weisen eine - in Umfangsrichtung gemessene - erste Breite B1 auf, wobei die Rundschlifffasen 21 der zweiten Schneiden 17 eine - in Umfangsrichtung gemessene - zweite Breite B2 aufweisen, was hier für die genau eine zweite Schneide 17 gilt. Die erste Breite B1 ist größer als die zweite Breite B2.

Weiter zeigt sich, dass die erste Anzahl der ersten Schneiden 15 größer ist als die zweite Anzahl der zweiten Schneiden 17, wobei - wie bereits ausgeführt - bei dem hier konkret dargestellten Ausführungsbeispiel der Reibahle 1 die erste Anzahl fünf beträgt, wobei, gemäß der Erfindung, die zweite Anzahl eins beträgt.

Es zeigt sich weiterhin, dass alle ersten Schneiden 15 einander - in Umfangsrichtung gesehen - unmittelbar benachbart sind, sodass sie in einer zusammenhängenden Gruppe angeordnet sind. Es sind also insbesondere nur und genau zwei erste Schneiden 15 vorgesehen, die nicht beidseitig von je einer ersten Schneide 15 eingerahmt sind, sondern nur eine unmittelbar benachbarte erste Schneide 15 auf einer Seite und auf der anderen Seite vielmehr eine benachbarte zweite Schneide 17 aufweisen. Alle anderen ersten Schneiden 15 bis auf diese beiden randständigen ersten Schneiden 15 sind dagegen beidseitig jeweils von einer ersten Schneide 15 benachbart.

Die hier vorgeschlagene Aufteilung der Schneiden 15, 17 sowie der Breiten B1, B2 führt zu einer besonders ruhigen und qualitativ hochwertigen Oberflächenbearbeitung eines bearbeiteten Werkstücks. Dabei kann die bearbeitete Oberfläche besonders glatt und eine bearbeitete Bohrung besonders rund ausgebildet werden.

Vorzugsweise sind auch alle zweiten Schneiden 17 einander - in Umfangsrichtung gesehen - unmittelbar benachbart, sodass sie in einer zusammenhängenden Gruppe angeordnet sind. Dies ist insbesondere dann der Fall, wenn ein Ausführungsbeispiel der mehrschneidigen Reibahle 1 ausschließlich erste Schneiden 15 und zweite Schneiden 17, jedoch keine weiteren, insbesondere dritten Schneiden aufweist.

Die Schneiden 15, 17 weisen jeweils eine Freifläche 23 auf, die sich - in Umfangsrichtung gesehen - an die jeweilige Rundschlifffase 21 anschließt. Der einfacheren Übersicht wegen ist hier auch nur eine der Freiflächen 23 mit dem entsprechenden Bezugszeichen gekennzeichnet. Die Schneidkanten 19 ergeben sich jeweils insbesondere als Schnittlinien einer an den Schneiden 15, 17 jeweils angeordneten Spanfläche 25 mit der jeweiligen Rundschlifffase 21.

Zwischen den sich wie Arme ausgehend von dem Grundkörper 5 radial nach außen erstreckenden Schneiden 15, 17 sind jeweils Spanräume 27 ausgebildet, in welche von den Schneidkanten 19 abgetragene und über die Spanflächen 25 ablaufende Späne eines mit der Reibahle 1 bearbeiteten Werkstücks gelangen, und über welche die Späne abtransportiert werden können. Der besseren Übersichtlichkeit wegen sind hier auch nur eine der Spanflächen 25 sowie ein Spanraum 27 mit den entsprechenden Bezugszeichen gekennzeichnet.

Die Schneiden 15, 17 sind hier in ungleichen Winkelabständen - in Umfangsrichtung gesehen - zueinander angeordnet, d.h. insbesondere asymmetrisch entlang des Umfangs der Reibahle 1 verteilt.

Die Schneiden 15, 17 weisen außerdem an ihrem jeweiligen Übergang zu dem Grundkörper 5 - in Umfangsrichtung gesehen - zumindest paarweise oder alle untereinander ungleiche und insbesondere verschiedene Breiten auf. Die Breiten der Schneiden 15, 17 an deren Übergang zum Grundkörper 5 werden dabei in Umfangsrichtung gemessen.

In entsprechender Weise weisen auch die Freiflächen 23 der verschiedenen Schneiden 15, 17 verschiedene - in Umfangsrichtung gemessene - Breiten auf. Insbesondere ist es möglich, dass die Freiflächen 23 der ersten Schneiden 15 größer, das heißt breiter sind als die Freiflächen 23 der zweiten Schneiden 17, oder dass umgekehrt die Freiflächen 23 der zweiten Schneiden 17 größer sind als die Freiflächen 23 der ersten Schneiden 15. Es ist aber auch möglich, dass die Freiflächen 23 der ersten Schneiden 15 und/oder die Freiflächen 23 der zweiten Schneiden 17 jeweils untereinander verschiedene Breiten aufweisen. Insbesondere ist es möglich, dass alle Schneiden 15, 17 jeweils verschieden breite Freiflächen 23 aufweisen.

Bevorzugt weist zumindest eine der Schneiden 15, 17 eine geteilte Freifläche 23 auf, die einen ersten, sich unmittelbar an die Rundschlifffase 21 anschließenden Freiflächenbereich 23.1 und einen zweiten, sich an den ersten Freiflächenbereich 23.1 unmittelbar anschließenden Freiflächenbereich 23.2 aufweist. Bei dem hier dargestellten Ausführungsbeispiel weisen alle Schneiden 15, 17 solche geteilten Freiflächen 23 auf. Der erste Freiflächenbereich 23.1 geht hier über einen Knick in den zweiten Freiflächenbereich 23.2 über. Alternativ kann der Übergang auch als Krümmung ausgestaltet sein. Jedenfalls schließen der erste Freiflächenbereich 23.1 und der zweite Freiflächenbereich 23.2 einen von 0° und von 180° verschiedenen Winkel miteinander ein.

Eine Summe der ersten Breiten B1 beträgt bevorzugt zwischen 3,5 % und 10 % des Werkzeugumfangs der Reibahle 1. Eine Summe der zweiten Breiten B2 beträgt vorzugsweise zwischen 0,4 % und 1,3 % des Werkzeugumfangs der Reibahle 1. Eine Summe der ersten Breiten B1 und der zweiten Breiten B2 beträgt vorzugsweise zwischen 3,9 % und 11 % des Werkzeugumfangs.

Bevorzugt beträgt die erste Breite B1 zwischen 0,3 mm und 0,55 mm. Vorzugsweise beträgt die zweite Breite B2 zwischen 0,1 mm und 0,35 mm.

Insgesamt zeigt sich, dass mit der hier vorgeschlagenen Reibahle 1 besonders hohe Oberflächenqualitäten und Rundheiten von Bohrungen erreicht werden können.

## Patentansprüche

1. Mehrschneidige Reibahle (1), mit einem Schneidbereich (3), der einen eine Mittelachse (M) umfassenden Grundkörper (5) aufweist,
- von welchem zumindest eine erste Anzahl von ersten Schneiden (15) mit jeweils einer Schneidkante (19) und mit einer sich daran anschließenden, einen Führungsbereich für die jeweilige erste Schneide (15) bildenden Rundschlifffase (21) mit einer ersten Breite (B1), und eine zweite Anzahl von zweiten Schneiden (17) mit jeweils einer Schneidkante (19) und mit einer sich daran anschließenden, einen Führungsbereich für die jeweilige zweite Schneide (17) bildenden Rundschlifffase (21) mit einer zweiten Breite (B2) ausgehen, wobei
- die erste Breite (B1) größer ist als die zweite Breite (B2), wobei
- die erste Anzahl von ersten Schneiden (15) größer ist als die zweite Anzahl von zweiten Schneiden (17), wobei
- alle ersten Schneiden (15) einander - in Umfangrichtung gesehen - unmittelbar benachbart sind, sodass sie in einer zusammenhängenden Gruppe angeordnet sind,
**dadurch gekennzeichnet, dass**
- genau eine zweite Schneide (17) vorgesehen ist, und dass
- die erste Anzahl von mindestens drei bis höchstens sieben beträgt.

2. Mehrschneidige Reibahle (1) nach einem der vorhergehenden Ansprüche, **dadurch gekennzeichnet, dass** zumindest eine der Schneiden (15,17), ausgewählt aus den ersten Schneiden (15) und der genau einen zweiten Schneide (17), eine Freifläche (23) aufweist, welche sich an die Rundschlifffase (21) anschließt.

3. Mehrschneidige Reibahle (1) nach einem der vorhergehenden Ansprüche, **dadurch gekennzeichnet, dass** die Schneiden (15,17) in ungleichen Winkelabständen zueinander angeordnet sind.

4. Mehrschneidige Reibahle (1) nach einem der vorhergehenden Ansprüche, **dadurch gekennzeichnet, dass** die Schneiden (15,17) an ihrem Übergang zum Grundkörper (5) - in Umfangrichtung gesehen - ungleiche Breiten aufweisen.

5. Mehrschneidige Reibahle (1) nach einem der vorhergehenden Ansprüche, **dadurch gekennzeichnet, dass** die Freifläche (23) von zumindest einer Schneide (15,17), ausgewählt aus den ersten Schneiden (15) und der genau einen zweiten Schneide (17), größer ist als die Freifläche (23) von zumindest einer anderen Schneide (15,17), ausgewählt aus den ersten Schneiden (15) und der genau einen zweiten Schneide (17).

6. Mehrschneidige Reibahle (1) nach einem der vorhergehenden Ansprüche, **dadurch gekennzeichnet, dass** eine Summe der ersten Breiten (B1) zwischen 3,5 % und 10 % eines Werkzeugumfangs beträgt, wobei die zweite Breite (B2) wischen 0,4 % und 1,3 % des Werkzeugumfangs beträgt; oder dass eine Summe der ersten Breiten (B1) und der zweiten Breite (B2) zwischen 3,9 % und 11 % des Werkzeugumfangs beträgt.

7. Mehrschneidige Reibahle (1) nach einem der vorhergehenden Ansprüche, **dadurch gekennzeichnet, dass** die erste Breite (B1) zwischen 0,3 mm und 0,55 mm beträgt, wobei die zweite Breite (B2) zwischen 0,1 mm und 0,35 mm beträgt.

8. Mehrschneidige Reibahle (1) nach einem der vorhergehenden Ansprüche, **dadurch gekennzeichnet, dass** die Summe aus der ersten Anzahl von ersten Schneiden (15) und der genau einen zweiten Schneide (17) vier, sechs oder acht beträgt.

## Claims

1. A multi-edge reamer (1) with a cutting region (3) having a base body (5) comprising a centre axis (M),
- wherein from the cutting region (3) extend
- at least a first number of first edges (15), each with a cutting edge (19) and with an adjoining circular grinding chamfer (21) with a first width (B1) forming a guide region for the respective first edge (15), and
- a second number of second edges (17), each with a cutting edge (19) and with an adjoining circular grinding chamfer (21) with a second width (B2) forming a guide region for the respective second edge (17), wherein
- the first width (B1) is greater than the second width (B2), wherein
- the first number of first edges (15) is greater than the second number of second edges (17), wherein
- all the first edges (15) are directly adjacent to one another - viewed in circumferential direction - so that they are arranged in a contiguous group, **characterised in that**
- exactly one second edge (17) is provided, and **in that**
- the first number is at least three to at most seven.

2. The multi-edge reamer (1) of any one of the preceding claims, **characterised in that** at least one of the edges (15, 17), selected from the first edges (15) and the exactly one second edge (17), has a clearance flank (23) which adjoins the circular grinding chamfer (21).

3. The multi-edge reamer (1) of any one of the preceding claims, **characterised in that** the edges (15, 17) are arranged at unequal angular distances from one another.

4. The multi-edge reamer (1) of any one of the preceding claims, **characterised in that** the edges (15, 17) have unequal widths at their transition to the base body (5) - viewed in circumferential direction.

5. The multi-edge reamer (1) of any one of the preceding claims, **characterised in that** the clearance flank (23) of at least one edge (15, 17), selected from the first edges (15) and the exactly one second edge (17), is larger than the clearance flank (23) of at least one other edge (15, 17), selected from the first edges (15) and the exactly one second edge (17).

6. The multi-edge reamer (1) of any one of the preceding claims, **characterised in that** a sum of the first widths (B1) is between 3.5 % and 10 % of a tool circumference, wherein the second width (B2) is between 0.4 % and 1.3 % of the tool circumference; or **in that** a sum of the first widths (B1) and the second width (B2) is between 3.9 % and 11 % of the tool circumference.

7. The multi-edge reamer (1) of any one of the preceding claims, **characterised in that** the first width (B1) is between 0.3 mm and 0.55 mm, wherein the second width (B2) is between 0.1 mm and 0.35 mm.

8. The multi-edge reamer (1) of any one of the preceding claims, **characterised in that** the sum of the first number of first edges (15) and the exactly one second edge (17) is four, six or eight.

## Revendications

1. Alésoir à plusieurs tranchants (1), avec une zone de coupe (3) qui présente un corps de base (5) comprenant un axe médian (M),
- à partir duquel corps de base s'étendent au moins un premier nombre de premiers tranchants (15) avec respectivement un bord de coupe (19) et avec un chanfrein de rectification cylindrique (21), attenant à celui-ci, formant une zone de guidage pour le premier tranchant (15) respectif, avec une première largeur (B1), et un deuxième nombre de deuxièmes tranchants (17) avec respectivement un bord de coupe (19) et avec un chanfrein de rectification cylindrique (21), attenant à celui-ci, formant une zone de guidage pour le deuxième tranchant (17) respectif, avec une deuxième largeur (B2), dans lequel
- la première largeur (B 1) est supérieure à la deuxième largeur (B2), dans lequel
- le premier nombre de premiers tranchants (15) est supérieur au deuxième nombre de deuxièmes tranchants (17), dans lequel
- tous les premiers tranchants (15) sont immédiatement adjacents - vus dans la direction circonférentielle - les uns aux autres, de sorte à être disposés en un groupe cohérent,
**caractérisé en ce que**
- exactement un deuxième tranchant (17) est prévu, et **en ce que**
- le premier nombre va d'au moins trois à au plus sept.

2. Alésoir à plusieurs tranchants (1) selon l'une des revendications précédentes, **caractérisé en ce qu'**au moins l'un des tranchants (15, 17), sélectionné parmi les premiers tranchants (15) et l'exactement un deuxième tranchant (17), présente une surface libre (23), laquelle est attenante au chanfrein de rectification cylindrique (21).

3. Alésoir à plusieurs tranchants (1) selon l'une des revendications précédentes, **caractérisé en ce que** les tranchants (15, 17) sont disposés à des distances angulaires inégales les uns des autres.

4. Alésoir à plusieurs tranchants (1) selon l'une des revendications précédentes, **caractérisé en ce que** les tranchants (15, 17) présentent au niveau de leur jonction au corps de base (5) - vus dans la direction circonférentielle - des largeurs inégales.

5. Alésoir à plusieurs tranchants (1) selon l'une des revendications précédentes, **caractérisé en ce que** la surface libre (23) d'au moins un tranchant (15, 17), sélectionné parmi les premiers tranchants (15) et l'exactement un deuxième tranchant (17), est plus grande que la surface libre (23) d'au moins un autre tranchant (15, 17), sélectionné parmi les premiers tranchants (15) et l'exactement un deuxième tranchant (17).

6. Alésoir à plusieurs tranchants (1) selon l'une des revendications précédentes, **caractérisé en ce qu'**une somme des premières largeurs (B1) représente entre 3,5 % et 10 % d'une circonférence de l'outil, dans lequel la deuxième largeur (B2) représente entre 0,4 % et 1,3 % de la circonférence de l'outil, ou **en ce qu'**une somme des premières largeurs (B1) et de la deuxième largeur (B2) représente entre 3,9 % et 11 % de la circonférence de l'outil.

7. Alésoir à plusieurs tranchants (1) selon l'une des revendications précédentes, **caractérisé en ce que** la première largeur (B1) représente entre 0,3 mm et 0,55 mm, dans lequel la deuxième largeur (B2) représente entre 0,1 mm et 0,35 mm.

8. Alésoir à plusieurs tranchants (1) selon l'une des revendications précédentes, **caractérisé en ce que** la somme du premier nombre de premiers tranchants (15) et de l'exactement un deuxième tranchant (17) est égale à quatre, six ou huit.
